Europäisches Patentamt

(19) European Patent Office

Office européen des brevets

(11) Publication number: **0 014 581**
A2

## (12) EUROPEAN PATENT APPLICATION

(21) Application number: **80300324.3**

(22) Date of filing: **04.02.80**

(51) Int. Cl.³: **G 06 F 13/00**
**G 06 F 15/16, G 06 F 9/06**
**G 11 C 8/00**

(30) Priority: **05.02.79 JP 12067/79**

(43) Date of publication of application:
**20.08.80 Bulletin 80/17**

(84) Designated Contracting States:
**DE FR GB**

(71) Applicant: **FUJITSU FANUC LIMITED**
**5-1, Asahigaoka, 3-chome**
**Hino-shi, Tokyo 191(JP)**

(72) Inventor: **Kurakake, Mitsuo**
**No. 2-16-2, Naito**
**Kokubunji-shi Tokyo(JP)**

(74) Representative: **Bedggood, Guy Stuart et al,**
**Haseltine Lake & Co. Hazlitt House 28 Southampton**
**Buildings Chancery Lane**
**London WC2A 1AT(GB)**

(54) Addressing system for and methods of addressing memories in computer systems.

(57) A computer system has a processing units (CPU1 to CPU3), with independent address buses (BUS1 to BUS3), and memories (MEM1 to MEM4) each connectible to any of the address buses (BUS1 to BUS3). The addressing system provides each processing unit (CPU1 to CPU3) with an address modification register (REG1 to REG3) and an adder (AD1 to AD3). The adder (AD1, AD2 or AD3) adds the content (an address modification number) of the address modification register (REG1, REG2, or REG3) to an address output from the processing unit (CPU1, CPU2 or CPU3) to provide an added address which is used for memory addressing.

This addressing system, and the method of addressing memories using stored address modification numbers which are added to addresses output from processing units, provides that independently of the allocation of memory space to a processing unit, the lead address of the memory space used by the unit can have, from the point of view of the processor, a zero (first) address.

FIG. 3

-1-
Addressing Systems For, And Methods Of
Addressing Memories In, Computer Systems.

This invention relates to addressing systems for, and methods of addressing memories in, computer systems.

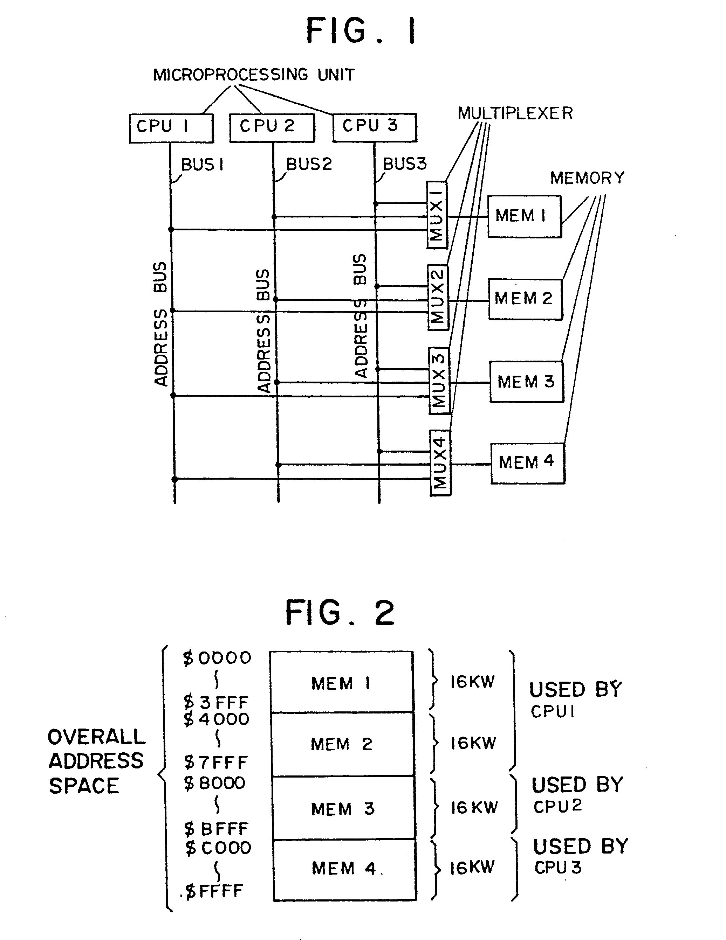

As a result of the considerable progress in large scale integrated circuit technology which has taken place in recent years, processing units of high performance are now available at relatively low costs and it has become possible to carry into practice systems in which pluralities of processing units are employed in the equipment, thereby to provide for enhanced performance of the system as a whole. In such a system, the effective utilization of memories in the system and universality in the system (e.g. ability of each processing unit to access any of the memories) are desired. To this end there has heretofore been proposed a computer system such, for example, as shown in Fig. 1 of the accompanying drawings which is a schematic block diagram illustrating processors and memories connected in the system.

In Fig. 1, the computer system comprises microprocessing units CPU1 to CPU3 and memories MEM1 to MEM4. The system is such that each memory can be connected to any desired one of address buses BUS1 to BUS3 of the microprocessing units CPU1 to CPU3 by way of multiplexers MUX1 to MUX4, respectively. By switching the multiplexers MUX1 to MUX4, each microprocessing unit can be permitted to use any desired one of the memories MEM1 to MEM4.

Assuming that each of the memories MEM1 to MEM4 has, for example, a capacity of 16K words, the overall memory address space of the system may be such as is shown in Fig. 2 of the accompanying drawings, which is a memory map illustrating a possible allocation of the memories MEM1 to MEM4, which have a total capacity of 64K words, in relation to the microprocessing units CPU1 to CPU3. In the case of Fig. 2, setting multiplexers, for example MUX1 and MUX2 to pass addresses from microprocessing unit CPU1 and the multiplexers MUX3 and MUX4 to pass addresses from microprocessing units CPU2 and CPU3 respectively, the microprocessing unit CPU1 is able to use an address area $0000 to $7FFF (hexadecimal notation) of the total address area $0000 to $FFFF of the memories MEM1 to MEM4, whereas the microprocessing units CPU2 and CPU3 are able to use address areas $8000 to $BFFF and $C000 to $FFFF, respectively. Since the setting of the multiplexers MUX1 to MUX4 can be altered freely in accordance with the respective memory capacities necessary for the microprocessing units CPU1 to CPU3, the universality of the system can be enhanced.

Incidentally, as will be appreciated from the memory map of Fig. 2, when respective memories MEM1 to MEM4 are allocated for use by respective microprocessing units CPU1 to CPU3 (e.g. MEM1 by CPU1, MEM2 by CPU1, MEM3 by CPU2, MEM4 by CPU3), the leading memory address that is accessed by a microprocessing unit is not naturally $0000 (except in the case of CPU1 in the above example, in which case the leading address accessed is $0000 of MEM1). The leading address accessed by microprocessing units will also vary with modification of memory allocation. Therefore, an address that should, desirably, be fixed for a microprocessing unit, such as, for example, a start address accessed immediately after power source connection, or a leading address of a stack for a subroutine, is not in fact fixed or constant (it depends on memory allocation). Furthermore, with the arrangement of Fig. 1 it is impossible to adopt a direct addressing method which is effective for use when producing instructions of short word length to reduce execution time and the number of program steps, for example, an addressing method which is effective for addresses in a limited range, for such data as is stored in the address area from address $0000 to address $00FF for example. Accordingly, each time allocation of memories MEM1 to MEM4 to the microprocessing units CPU1 to CPU3 is modified, hardware and software must also be modified which can make modification of memory allocation essentially difficult, and since such on abovementioned direct addressing method cannot be employed, the number of program steps may be greater than if such a method could be employed.

According to one aspect of the present invention there is provided an addressing system for a computer system including a plurality of processing units having respective independent address buses, and a plurality of memories each addressable by a respective series of addresses and each connectible with any of the address buses, characterised in that the processing units are provided with respective address modification registers and respective adders operable in response to an address output from a processing unit to add the content of the address modification register provided in respect of that processing unit to the address output and to pass on the result to the address bus of that processing unit.

According to another aspect of the present invention, there is provided a method of addressing memories in a computer system including a plurality of processing units having respective independent address buses, and a plurality of memories each addressable by a respective series of addresses and each connectible with any of the address buses, characterised by

storing respective address modification numbers for the processing units,

adding to each address output from each processing unit the respective address modification number, and

passing on the results of such additions to the respective address buses of the processing units, for addressing the memories.

An addressing system embodying this invention can ensure that, from the point of view of any processing unit of the computer system, the leading address of a memory space to be accessed by that processing unit, for example a microprocessing unit, is always $0000.

The addressing system of this invention permits easy modification of memory allocation and system modification.

The addressing system embodying this invention can facilitate a reduction in the number of program steps to be carried out by a processing unit, to enhance its throughput.

Briefly stated, embodiments of this invention provide that in a computer system in which a plurality of memories are given respective series of addresses and are arranged to be connectible with any address bus of a plurality of processing units, the memory capacity usable by each processing unit can be varied by changing the connections between the memories and the processing units, by use of an address modification register and an adder provided for each processing unit. Each adder adds to an address from the processing unit concerned the content of the address modification register concerned and provides the added output on the address bus of the processing unit. The content of the address modification register can be rewritten when memory allocation is modified; in concrete terms, the content of the address modification register of a processing unit is set to the address number of the leading address of the memory space assigned to the processing unit.

Reference is made, by way of example, to the accompanying drawings, in which:-

Fig. 1, as mentioned above, is a schematic block diagram illustrating a previously proposed computer system;

Fig. 2, as mentioned above, is a diagram illustrating memory address space, a memory map; and

Fig. 3 is a schematic block diagram illustrating principal parts of one example of a computer system embodying this invention.

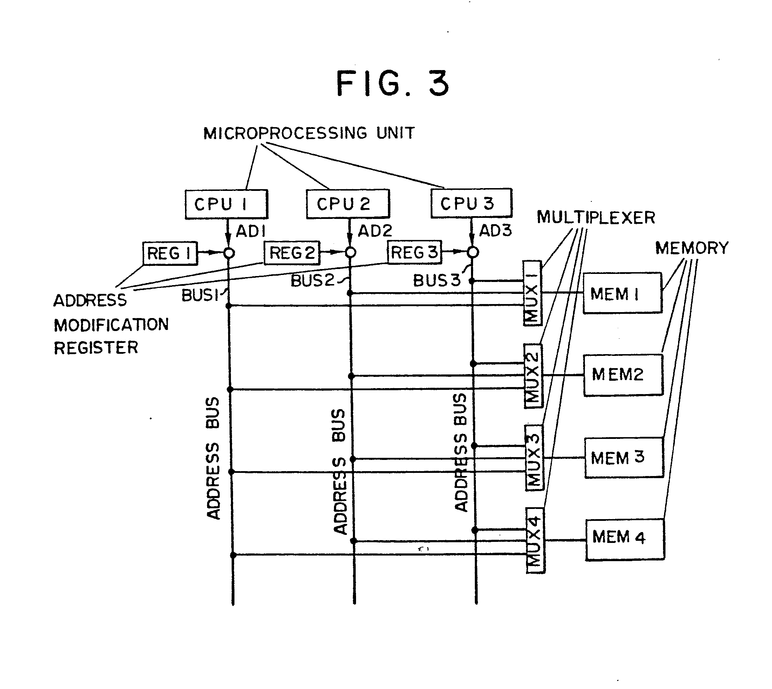

In Fig. 3, parts corresponding to those shown in Fig. 1 are identified by the same reference characters. REG1 to REG3 are address modification registers, and AD1 to AD3 are adders. In the present embodiment of this invention, microprocessing units CPU1 to CPU3 are provided with respective address modification registers REG1 to REG3 and respective adders AD1 to AD3. Each adder AD1 to AD3 adds the address output from the microprocessing unit, CPU1 to CPU3, concerned to the content of the address modification register, REG1 to REG3, concerned and delivers the resulting added output on the appropriate address bus, BUS1 to BUS3.

In a case in which the memory area from address $0000 to address $7FFF is allocated to the microprocessing unit CPU1, the area from address $8000 to address $BFFF is allocated to CPU2, and the area from $C000 to $FFFF is allocated to CPU3, the contents of the address modification registers REG1 to REG3 are set to $0000, $8000 and $C000, respectively. With these settings, the leading address of the memory address space to be accessed by each microprocessing unit can always be regarded as $0000 from the point of view of the microprocessing unit. When memory allocation is altered by switching the multiplexers MUX1 to MUX4, the contents of the address modification registers REG1 to REG3 are changed so that their contents correspond to the address numbers of the leading addresses of the memory spaces newly assigned to the respective corresponding microprocessing units; as a consequence, the leading address of the memory can always be regarded as $0000 from the point of view of a microprocessing unit. This enables fixing of an address such as, for example, a start address accessed immediately following power source connection or the leading address of a stack for a subroutine, permitting easy modification of the memory allocation or the system used, without involving hardward and software modifications. Further, since the leading address of the memory to be accessed by each microprocessing unit always starts at $0000, for example, direct addressing can be adopted to reduce the number of program steps and hence facilitate highspeed processing operation.

In the above description, the number of microprocessing units used has been taken to be three, but this is for convenience of explanation only; two, three or more microprocessing units can be employed as desired; furthermore, the number of memories is not limited to four, it may be two, three, four or more.

As has been described in the above, in a computer system embodying the present invention, having a plurality of processing units with respective independent address buses, and a plurality of memories connectible with any of the address buses and each accessible by a respective given series of addresses, an address modification register and an adder are provided in respect of each processing unit. The adder adds together address output from the processing unit and the content of the address modification register and provides the added output on the address bus of the processing unit. By proper setting of the contents of the address modification registers, the leading address of memory to be accessed by each processing unit is held at $0000 at all times, so that the memory allocation can be modified without involving hardware and software modifications, permitting easy system modification. Further, since direct addressing can be adopted, the number of program steps can be reduced and processing speed increased.

Thus, a computer system embodying this invention has a plurality of processing units respectively having independent address buses, and a plurality of memories connectible with any of the address buses and each given a series of addresses. Each processing unit is equipped with an address modification register and an adder connected to its address bus, and an address output from the processing unit and the content of the address modification register are added together by the adder. The added output is provided on the address bus to address a desired one of the memories. This system permits easy modification of memory allocation and enhances the operation speed of each processing unit.

CLAIMS

1.    An addressing system for a computer system including a plurality of processing units having respective independent address buses, and a plurality of memories each addressable by a respective series of addresses and each connectible with any of the address buses, characterised in that the processing units are provided with respective address modification registers and respective adders operable in response to an address output from a processing unit to add the content of the address modification register provided in respect of that processing unit to the address output and to pass on the result to the address bus of that processing unit.

2.    A system as claimed in claim 1, wherein the content of each address modification register is set to the leading address of a memory address series that is allocated for use by the processing unit in respect of which the address modification register is provided.

3.    A system as claimed in claim 1 or 2, wherein the memories of the plurality are connected by way of respective multiplexers to the address buses.

4.    A system as claimed in claim 1, 2 or 3, wherein each of the processing units has a direct addressing function.

5.    A method of addressing memories in a computer system including a plurality of processing units having respective independent address buses, and a plurality of memories each addressable by a respective series of addresses and each connectible with any of the address buses, characterised by

storing respective address modification numbers for the processing units,

adding to each address output from each processing unit the respective address modification number, and

passing on the results of such additions to the respective address buses of the processing units, for addressing the memories.

-9-

6.    A method of addressing memories in a computer
system,as claimed in claim 5, wherein the address
modification numbers are stored in respective address
modification registers and are added to addresses
output from the respective processing units by means of
respective adders.

7.    A method of addressing memories in a computer
system,as claimed in claim 5 or 6, wherein the
respective address modification numbers are the
respective leading addresses of memory address series
allocated for use by the respective processing units.

# FIG. 1

# FIG. 2

0014581

# FIG. 3

MICROPROCESSING UNIT

CPU 1    CPU 2    CPU 3

MULTIPLEXER

AD1    AD2    AD3

MEMORY

REG 1    REG 2    REG 3

BUS2    BUS3

MUX 1    MEM 1

ADDRESS
MODIFICATION
REGISTER

BUS1

MUX 2    MEM2

ADDRESS BUS    ADDRESS BUS    ADDRESS BUS

MUX 3    MEM 3

MUX 4    MEM 4